# EUROPEAN PATENT SPECIFICATION

(11) **EP 1 559 617 B1**
(45) Date of publication and mention of the grant of the patent: **02.11.2006**
(21) Application number: 05250308.3
(22) Date of filing: 21.01.2005
(51) Int. Cl.: B60R 21/01, G01G 19/414

(54) **A load-detecting device for an object on a seat**
Vorrichtung zur Erfassung der Sitzbelastung
Dispositif de détection de charge sur un siège

(30) Priority: 28.01.2004 JP 2004020297
(43) Date of publication of application: 03.08.2005
(73) Proprietor: AISIN SEIKI KABUSHIKI KAISHA, Kariya-shi, Aichi-ken 448-8650 (JP)
(72) Inventor: Sakai, Morio, Int. Property Department, Kariya-shi Aichi-ken 448-8650 (JP); Mori, Masaki, Int. Property Department, Kariya-shi Aichi-ken 448-8650 (JP)
(74) Representative: Haines, Miles John L.S.

(56) References cited:
- EP-A- 1 114 986
- DE-A1- 4 037 143
- DE-A1- 4 205 911
- US-A1- 2002 118 104

## Description

### FIELD OF THE INVENTION

The present invention relates to a load-detecting device for an object on a seat. More particularly, the present invention pertains to a load-detecting device for an object on a seat, comprising a plurality of load-detecting sensors and a control unit for processing output signals of the sensors.

### BACKGROUND

It is necessary in the automobile industry to improve safety performance of a driver, a co-driver and guests in an automobile. Conventionally, a so-called air bag system is used for protecting them as the occupant on a seat at a traffic accident. Blowing volume, power and/or speed of the air bag is controlled since occupants' physique is different between an adult and a child. It is, therefore, significant to correctly judge whether an adult or a child occupies the seat, especially the co-driver's seat.

According to the device described in US-B- 6 774 804 corresponding to JP2002-240613A, four load-detecting sensors (eg. thick film sensor and/or strain gauges) are fixed on a supporting member to support a seat on an interior floor of the automobile. Each of the four sensors is fixed at the right and left side of the forward and backward portion of the supporting member so as to correctly detect the occupant's weight (load) on the seat. The sensors are connected to a control unit.

A strain gauge is usually employed as the load-detecting sensor because of its low cost. The output signal of the strain gauge is generally weak when a control unit is installed or located far from the strain gauge under the seat. An amplifier is necessary to amplify the output signal so as to reliably transmit the weak signal to the control unit. A signal-processing unit is installed near to the strain gauges to amplify the output signal. In addition, the unit controls and removes any noise on the output signal. Finally the unit transmits the signal to the control unit.

When the occupant sits on the seat, the load is not uniformly applied on the entire seat. Each load received at the four sensors is also not uniform. A load-detecting sensor for high load is used at a position on the seat where a relative high load is applied, and a load-detecting sensor for low-load is used at a position on the seat where a relative low load is applied, so as to reduce cost. Taking account of load distribution on the entire seat, first identical load-detecting sensors for low load are used at the right and left side of the forward portion of the seat (the supporting member), while second identical load-detecting sensors for high load are used at the right and left side of the backward portion of the seat (the supporting member). The first and second load-detecting sensors are different from each other in specific character, but are same as each other in shape. It has to be avoided to incorrectly install the first and second load-detecting sensors on the seat, since incorrect installation of the sensors leads to incorrect judgment of the occupant at the control unit.

A pair of connectors is arranged between the signal processing unit and the control unit. Each of the connectors corresponding to four sensors is able to comprise a unique lib for discrimination of the connectors. Indeed it is useful to avoid the incorrect installation of the sensors, but it brings higher cost.

### SUMMARY OF THE INVENTION

In light of the foregoing, the present invention provides a load-detecting device according to claim 1, in particular a load-detecting device for an object on a seat of an automobile comprising a plurality of load sensors for generating output signals corresponding to an object on the seat at least two of the load sensors being different in character, a plurality of signal processing circuits for processing the output signals so as to provide load signals with unique IDs corresponding to each of the sensors, and a control unit including a plurality of ports in communication with the signal processing circuits so as to load the load signals in the control unit, wherein the control unit is operable to execute an initialization process so that the ports is assigned in relation to the signal processing circuits based on the unique IDs included in the load signals.

### BRIEF DESCRIPTION OF THE DRAWINGS

The foregoing and additional features and characteristics of the present invention will become more apparent from the following detailed description when considered with reference to the accompanying drawings, wherein:

Fig. 1 is a perspective view of a seat for an automobile;

Fig. 2 is a side view of the seat with a load-detecting device for an object on the seat;

Fig. 3 is a perspective view of a front bracket applied on the seat;

Fig. 4 is a perspective view of a rear bracket applied on the seat;

Fig. 5 is block diagram of the load-detecting device;

Figs. 6 is a flowchart showing a program executed by a central processing unit in the load-detecting device; and

Fig. 7 shows the port arrangement of the central processing unit; and

Fig. 8 shows another port arrangement of the central processing unit.

### DETAILED DESCRIPTION

Embodiments of the present invention will be explained with reference to illustrations of the drawing figures as follows.

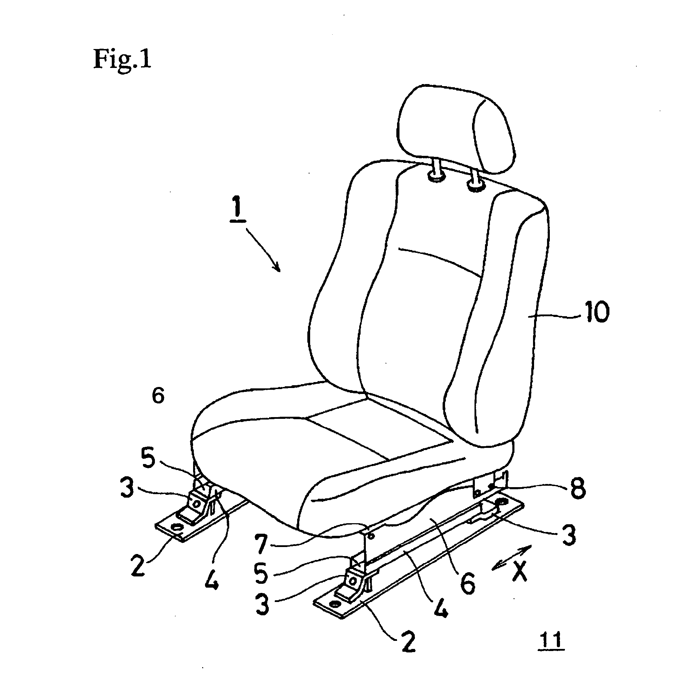

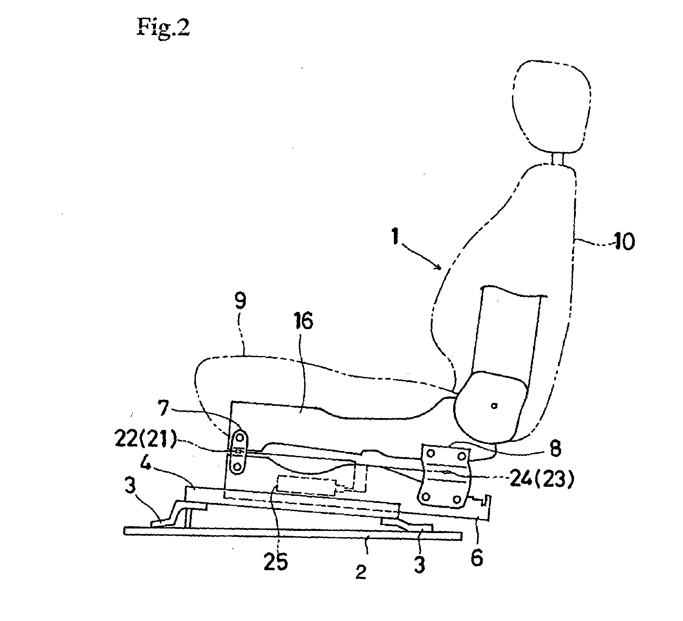

As shown in Figs. 1 and 2, a seat 1 is fixed on an inside room floor 11 of an automobile via a pair of supporting frames 2,2, supporting brackets 3,3,3,3, a pair of lower rails 4,4 and a pair of upper rails 6,6. The frames 2,2, the lower rails 4,4, and the upper rails 6,6 extend in forward and backward direction (X-direction) of the automobile. A pair of the supporting brackets 3,3 is fixed on the supporting frames 2,2 at forward and backward portions of the frames 2,2, respectively. The lower rails 4,4 are fixed on the supporting brackets 3,3,3,3 so as to extend along the supporting frames 2,2. Each of the lower rails 4,4 forms U-shaped in cross section and opens at the upper portion. Each opening of the lower rails 4,4 forms a slide channel 5 or slide race extending along the X-direction.

The upper rails 6,6 are slidably arranged in the openings of the lower rails 4,4, respectively. The upper rails 6,6 are connected with the lower arms 16,16 via a pair of front brackets 7,7 and a pair of rear brackets 8,8 at both right and left side of the seat 1.

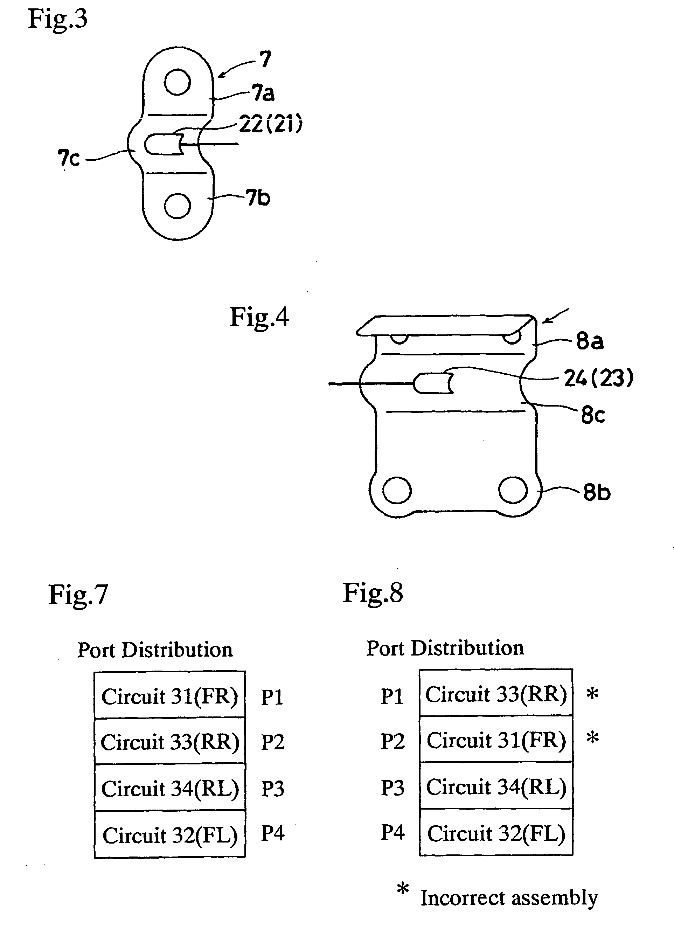

As shown in Fig.3, the front bracket 7,7 comprises an upper fixing portion 7a and a lower fixing portion 7b at the upper and lower ends of the bracket 7,7, respectively. A curved portion 7c of the bracket 7 is formed by presswork between the portions 7a and 7b. The fixing portion 7a is fixed at the forward portion of the lower arm 16 by a fixing member, while the fixing portion 7b is fixed at the forward portion of the upper rail 6 by a fixing member. Front-right and front-left load-detecting sensors 21 and 22 are fixed on the curved portion 7c of the front bracket 7,7, respectively.

As shown in Fig. 4, the rear bracket 8,8 comprises an upper fixing portion 8a and a lower fixing portion 8b at the upper and lower ends of the bracket 8,8, respectively. A curved portion 8c of the bracket 8,8 is formed by presswork between the portions 8a and 8b. The fixing portion 8a is fixed at the backward portion of the lower arm 16 by a fixing member, while the fixing portion 8b is fixed at the backward portion of the upper rail 6 by a fixing member. Rear-right and rear-left load-detecting sensors 23 and 24 are fixed on the curved portion 8c of the front bracket 8,8, respectively.

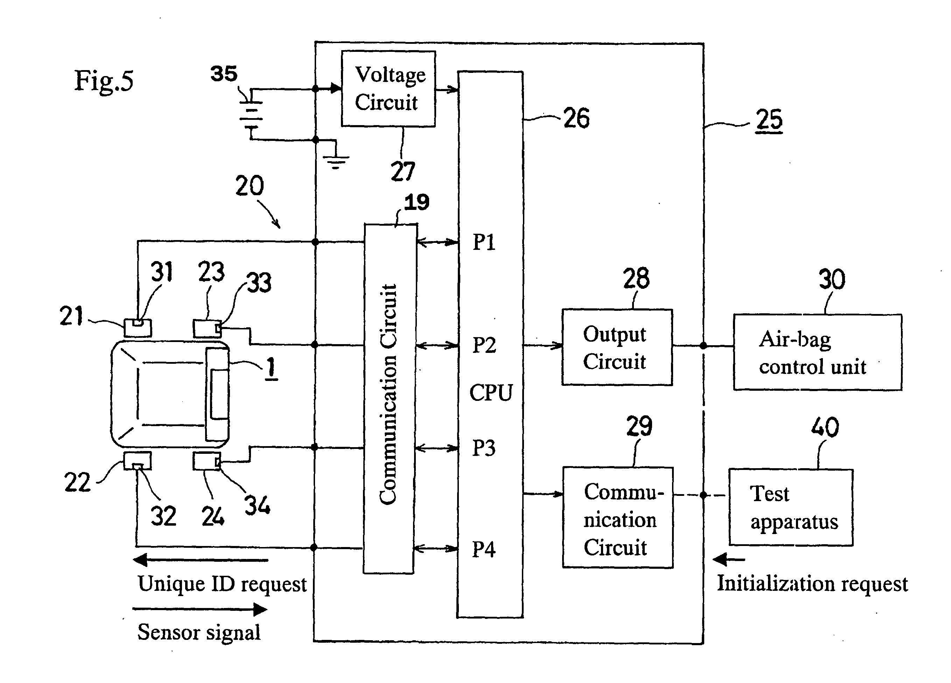

Consequently, the seat 1 is equipped with four load-detecting sensors 21 through 24 at forward and backward portion on both right and left side of the seat 1. As shown in Fig. 5, strain gauges (or thick film sensor) 21 through 24 are employed as sensors 21 through 24, respectively, because of its lower cost. The strain gauges electrically detects deflection amount of the curved portions 7c,7c and 8c,8c, respectively, due to the load applied on the seat cushion 9. Signal processing circuits 31 through 34 are integrally installed nearby the strain gauges 21 through 24, respectively. Each of the circuits 31 through 34 comprises a noise filter circuit (not shown) and an amplifier circuit (not shown). The noise filter circuit controls and/or removes noise on each analog output signal of the strain gauges 21 through 24. The amplifier circuit amplifies the amplitude of the analog output signal and transforms the analog signal into a digital signal (a load signal) with a unique ID corresponding to each of the strain gauges 21 through 24. In consideration of load distribution on the entire seat 1, the load-detecting sensors 21,22 are identical in shape and in character for low load, while the load-detecting sensors 23,24 are identical in shape and in character for high load.

The control unit 25 is driven by a battery 35 (eg. 12V) of the automobile. The unit 25 comprises Input/Output (I/O) circuits 19 and 29, a central processing unit (CPU) 26, a constant voltage circuit 27 and an output circuit 28. The I/O circuit 19 establishes two-way communication between ports P1, P2, P3 and P4 of the CPU 26 and the signal processing circuits 31, 33, 34 and 32 while the I/O circuit 29 establishes both-way communication with a test apparatus 40. Each digital load signal of the signal processing circuit 31, 33, 34 and 32 is outputted to ports P1, P2, P3 and P4 of the CPU 26, respectively. The CPU 26 comprises ROM and RAM (not shown) as well as a timer (not shown). The ROM stores a program and the RAM temporally stores a necessary data for processing the program. It will be appreciated that other forms of volatile or non-volatile memory may be used. The constant voltage circuit 27 generates a constant voltage (eg. 5V) so as to be supplied to the CPU 26. The output circuit 28 outputs control signal to an air-bag control unit 30.

In order to initialize the control unit 25, the test apparatus 40 is employed so as to be electrically connected with the CPU 26 through the I/O circuit 29. The initialization of the unit 25 is executed when the unit 25 is firstly booted by electrical connection between the unit 25 and the battery 35, when an apparatus including the unit 25 is shipped from a factory and/or when the strain gauges 21 through 24 and/or the unit 25 are replaced due to its malfunction. The test apparatus 40 provides the CPU 26 with an initialization request through the circuit 29 so that memorized contents in the CPU 26 is able to be re-written. The re-writable contents in the CPU 26 is port arrangement or port sequence for assigning the ports P1 through P4 corresponding to the circuit 31 through 34.

The output circuit 28 is electrically connected with the air-bag control unit 30 that controls the air-bag actuation for safely protecting the occupant in the automobile at a traffic accident. The CPU 26 judges whether the occupant is adult or child based on the digital load signal of the signal processing circuit 31 through 34. The air-bag control unit 30 controls air-bag actuation as well as blowing volume, power and/or speed of the air bag. The controller 30 allows use of the air bag when the occupant is adult, while the controller 30 prohibits the use of the air bag when the occupant is child.

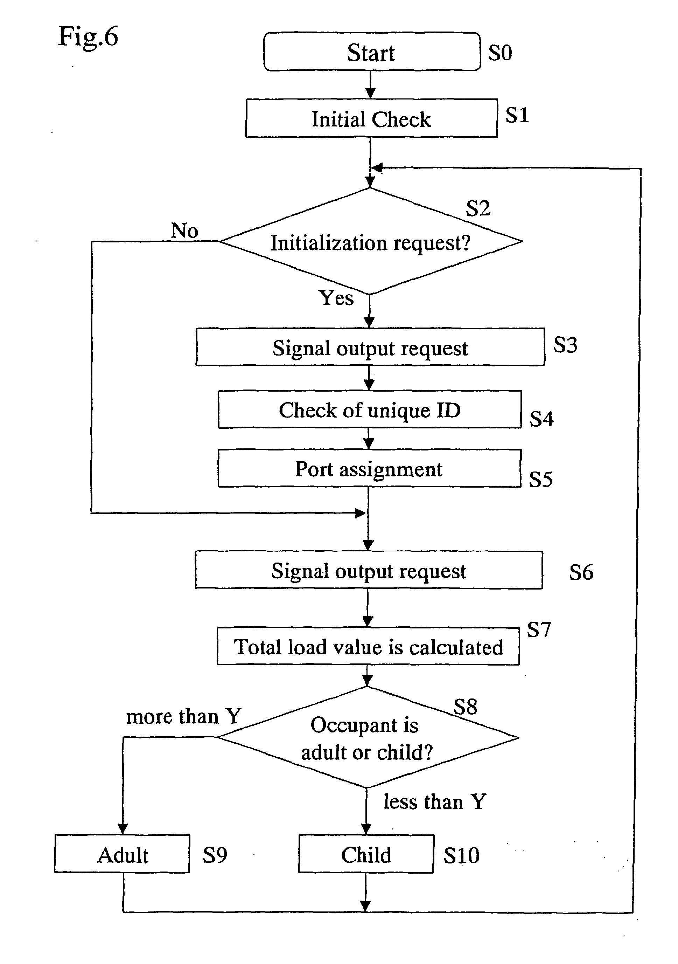

Referring to Fig. 6, the operation of the control unit 25 carried out by the software in the CPU 26 is described, as follows:

When the automobile is switched on, the CPU 26 is booted at the step S0 and processes initial check at the step S1. Namely, the CPU 26 checks possible error of the ROM and RAM in the CPU 26 as well as outside devices connected to the control unit 25. At the step S2, the CPU 26 judges whether an initialization request is executed by the test apparatus 40. Namely, it is judged whether the test apparatus 40 is connected with the control unit 25 so as to make an initialization request of the control unit 25. If the initialization request is not confirmed at the step S2, the CPU 26 processes the step S6.

If the initialization request is confirmed, the CPU 26 processes the step S3. At the step S3, the CPU 26 provides the circuits 31 through 34 with a signal output request. The digital load signals of the output circuits 31, 33, 34 and 32 are loaded into the CPU via the ports P1, P2, P3 and P4, respectively and stored in pre-determined address in the RAM of the CPU 26 based on the unique IDs. The ports P1, P2, P3 and P4 are assigned in relation to the circuits 31, 33, 34 and 32, as shown in Fig. 7. The port P1 of the CPU 26 is provided with the load signal of the circuit 31 corresponding to the front-right load-detecting sensor 21. The port P2 of the CPU 26 is provided with the load signal of the circuit 33 corresponding to the rear-right load-detecting sensor 23. The port P3 of the CPU 26 is provided with the load signal of the circuit 34 corresponding to the rear-left load-detecting sensor 24. The port P4 of the CPU 26 is provided with the load signal of the circuit 32 corresponding to the front-left load-detecting sensor 22. Each of the digital load signals of the circuits 31 through 34 comprises a frame with 15 bits (a start bit, two unique ID bits, 10 load data bits, a parity bit and a stop bit).

At the step S4, the CPU 26 checks the unique IDs from the load signals of the circuits 31, 33, 34 and 32, so that the unique IDs included in the load signals provided to the ports P1, P2, P3 and P4 of the CPU 26. A unique ID No. 1 is applied to the signal processing circuit 31 for the front-right load-detecting sensor 21. A unique ID No. 2 is applied to the signal processing circuit 33 for the rear-right load-detecting sensor 23. A unique ID No. 3 is applied to the signal processing circuit 34 for the rear-left load-detecting sensor 24. A unique ID No. 4 is applied to the signal processing circuit 32 for the front-left load-detecting sensor 22.

Next, at the step S5, the port arrangement of the port P1, P2, P3 and P4 are assigned in consideration of the unique IDs included in the load signals of the signal processing circuits 31, 33, 34 and 32, which is inputted into the port P1, P2, P3 and P4 of the CPU 26, at the step S5. Namely, if a load signal having the unique ID No.1, a corresponding connected port is assigned as port P1 so that the port is used for inputting and outputting a signal between the front-right load-detecting sensor 21 and control unit 25. If a load signal having the unique ID No.2, a corresponding connected port is assigned as port P2 so that the port is used for inputting and outputting a signal between the rear-right load-detecting sensor 23 and control unit 25. If a load signal having the unique ID No.3, a corresponding connected port is assigned as port P3 so that the port is used for inputting and outputting a signal between the rear-left load-detecting sensor 24 and control unit 25. If a load signal having the unique ID No.4, a corresponding connected port is assigned as port P4 so that the port is used for inputting and outputting a signal between the front-left load-detecting sensor 22 and control unit 25. These port assignments are achieved since the port arrangement corresponding to the unique IDs is pre-memorized in the CPU, as shown in Fig. 7.

At the step S6, the CPU 26 provides the circuits 31 through 34 with a signal output request. The digital load signals of the output circuits 31, 33, 34 and 32 are loaded into the CPU via the ports P1, P2, P3 and P4, respectively and stored in pre-determined address in the RAM of the CPU 26 based on the unique IDs. At the step S7, the CPU 26 calculates a total load value based on the digital load signals of the signal-processing circuits 31 through 34, for example. Namely, the total load value is calculated by a sum of load values corresponding to the digital load signals of the signal-processing circuits 31 through 34 for the sensors 21 through 24.

Usually, the signal processing circuits 31, 33, 34 and 32 are electrically connected with the ports P1, P2, P3 and P4, respectively, as shown in Fig. 5. Even if the sensors 21 and 23 are incorrectly installed so that the circuit 31 is connected with the port P2 and the circuit 33 is connected with the port P1, the CPU 26 assigns the port P2 as port P1 and the port P1 as port P2 at the step S5, as mentioned the above. The port arrangement is corrected, as shown in Fig. 8, so that the CPU 26 appropriately corrects the calculation.

At the step S8, the CPU 26 judges whether the occupant is adult or child according to the total load value. So-called filter processing is used for removing unusual load value during the judgment. If the total load value exceeds a pre-determined value Y at the step S8, the occupant is judged as adult at the step S9 and the CPU 26 processes the step S2. Meanwhile, if the total load value is less than a pre-determined value Y at the step S8, the occupant is judged as child at the step S10 and the CPU 26 processes the step S2. The CPU 26 repeats from the step S2 through S10 at a pre-determined interval.

The above embodiment shows four sensors 21 through 24, but the number of the sensors applied to a seat is not restricted to four but decided to arbitrary according to necessary design. If the output signals of the sensors 21 through 24 are not so weak or the output signals have high tolerance, the signal processing circuits 31 through 34 are able to be omitted or separately located from the sensors 21 through 24. On the former occasion, the unique IDs are appropriately added to the output signals. Meanwhile, even if the test apparatus 40 is not used, the port assignment for the load signals of the signal processing circuits 31 through 34 and the ports P1 through P4 is able to be automatically achieved when the control unit 25 is firstly connected with the battery 35.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made. Accordingly, it is expressly intended that all such variations and changes that fall within the scope of the present invention as defined in the claims, be embraced thereby.

## Claims

1. A load-detecting device for an object on a seat (1) of an automobile comprising:
a plurality of load sensors (21, 22, 23, 24) for generating output signals corresponding to an object on the seat, at least two of the load sensors (21, 22, 23, 24) being different in character;
a plurality of signal processing circuits (31, 32, 33, 34) for processing the output signals so as to provide load signals with unique IDs corresponding to each of the sensors (21, 22, 23, 24); and
a control unit (25) including a plurality of ports in communication with the signal processing circuits (31, 32, 33, 34) so as to load the load signals in the control unit;
wherein the control unit (25) is operable to execute an initialization process so that the ports are assigned in relation to the signal processing circuits (31, 32, 33, 34) based on the unique IDs included in the load signals.

2. The load-detecting device according to the claim 1, wherein
the control unit (25) is operable to execute an initialization process when a test apparatus (40) is electrically connected with the control unit.

3. The load-detecting device according to claim 1 or 2, wherein
the control unit (25) includes a memory for storing a port assignment and the port assignment is re-written upon the initialization process.

4. The load-detecting device according to claim 1, 2 or 3, wherein
the control unit (25) judges that an occupant on the seat (1) is an adult when the sum of the load value of the load signals exceeds a pre-determined value, and that an occupant on the seat is a child when the sum of the load value of the load signals is less than the pre-determined value.

5. The load-detecting device according to any one of claims 1 to 4, wherein
the load signals are digital signals and the signal processing circuits (31, 32, 33, 34) are operable to provide the digital load signals responsive to a signal output request from the control unit (25).

6. An automobile comprising a seat (1) and the load-detecting device according to any one of claims 1 to 5, wherein
the load sensors (21, 22, 23, 24) are arranged between the seat (1) and an interior floor of the automobile.

## Patentansprüche

1. Vorrichtung zur Erfassung einer Belastung hinsichtlich eines auf einem Sitz (1) eines Automobils befindlichen Objekts, mit:
einer Vielzahl von Belastungssensoren (21, 22, 23, 24) zum Erzeugen von Ausgabesignalen entsprechend einem Objekt auf dem Sitz, wobei zumindest zwei der Belastungssensoren (21, 22, 23, 24) in ihrer Eigenschaft unterschiedlich sind;
eine Vielzahl von Signalverarbeitungsschaltungen (31, 32, 33, 34) zum Verarbeiten der Ausgabesignale, um Belastungssignale mit eindeutigen IDs entsprechend jedem von den Sensoren (21, 22, 23, 24) bereitzustellen; und
eine Steuerungseinheit (25) mit einer Vielzahl von Anschlüssen, die in Kommunikation mit den Signalverarbeitungsschaltungen (31, 32, 33, 34) stehen, um die Belastungssignale in die Steuerungseinheit zu laden;
wobei die Steuerungseinheit (25) betriebsfähig ist, einen Initialisierungsprozess auszuführen, so dass die Anschlüsse mit Bezug auf die Signalverarbeitungsschaltungen (31, 32, 33, 34) basierend auf den eindeutigen IDs, die in den Belastungssignalen enthalten sind, zugewiesen werden.

2. Vorrichtung zur Erfassung einer Belastung gemäß Anspruch 1, wobei
die Steuerungseinheit (25) betriebsfähig ist, einen Initialisierungsprozess auszuführen, wenn eine Testvorrichtung (40) mit der Steuerungseinheit elektrisch verbunden ist.

3. Vorrichtung zur Erfassung einer Belastung gemäß Anspruch 1 oder 2, wobei
die Steuerungseinheit (25) einen Speicher zum Speichern einer Anschlusszuweisung umfasst und die Anschlusszuweisung auf den Initialisierungsprozess hin überschrieben wird.

4. Vorrichtung zur Erfassung einer Belastung gemäß Anspruch 1, 2 oder 3, wobei
die Steuerungseinheit (25) beurteilt, dass ein Insasse auf dem Sitz (1) ein Erwachsener ist, wenn die Summe des Belastungswerts der Belastungssignale einen vorbestimmten Wert überschreitet, und dass ein Insasse auf dem Sitz ein Kind ist, wenn die Summe des Belastungswerts der Belastungssignale kleiner als der vorbestimmte Wert ist.

5. Vorrichtung zur Erfassung einer Belastung gemäß einem der Ansprüche 1 bis 4, wobei
die Belastungssignale digitale Signale sind und die Signalverarbeitungsschaltungen (31, 32, 33, 34) betriebsfähig sind, die digitalen Belastungssignale als Reaktion auf eine Signalausgabeanforderung der Steuerungseinheit (25) bereitzustellen.

6. Automobil mit einem Sitz (1) und der Vorrichtung zur Erfassung einer Belastung gemäß einem der Ansprüche 1 bis 5, wobei
die Belastungssensoren (21, 22, 23, 24) zwischen dem Sitz (1) und einem Innenboden des Automobils angeordnet sind.

## Revendications

1. Dispositif de détection de charge pour un objet sur un siège (1) d'une automobile comprenant :
une pluralité de capteurs de charge (21, 22, 23, 24) destinés à générer des signaux de sortie correspondant à un objet sur un siège, au moins deux des capteurs de charge (21, 22, 23, 24) étant de caractère différent ;
une pluralité de circuits de traitement de signal (31, 32, 33, 34) destinés à traiter les signaux de sortie de manière à attribuer aux signaux de charge des identités uniques à chacun des capteurs (21, 22, 23, 24) ; et
une unité de commande (25) comprenant une pluralité de ports en communication avec les circuits de traitement de signal (31, 32, 33, 34) de manière à charger les signaux de charge dans l'unité de commande ;
dans lequel l'unité de commande (25) peut être actionnée de manière à exécuter un processus d'initialisation de telle sorte que les ports soient attribués en rapport avec les circuits de traitement de signal (31, 32, 33, 34) sur la base des identités uniques incluses dans les signaux de charge.

2. Dispositif de détection de charge selon la revendication 1, dans lequel :
l'unité de commande (25) peut être actionnée de manière à exécuter un processus d'initialisation lorsqu'un testeur (40) est connecté électriquement à l'unité de commande.

3. Dispositif de détection de charge selon la revendication 1 ou 2, dans lequel :
l'unité de commande (25) comprend une mémoire destinée à enregistrer une attribution de ports et l'attribution de ports est réécrite au moment du processus d'initialisation.

4. Dispositif de détection de charge selon la revendication 1, 2 ou 3, dans lequel :
l'unité de commande (25) juge si un occupant du siège (1) est un adulte lorsque la somme de la valeur de charge des signaux de charge dépasse une valeur prédéterminée, et qu'un occupant du siège est un enfant lorsque la somme des valeurs de charge des signaux de charge est inférieure à la valeur prédéterminée.

5. Dispositif de détection de charge selon l'une quelconque des revendications 1 à 4, dans lequel :
les signaux de charge sont des signaux numériques et les circuits de traitement de signal (31, 32, 33, 34) peuvent être actionnés de manière à fournir les signaux de charge numériques en réponse à une demande de sortie de signal provenant de l'unité de commande (25).

6. Automobile comprenant un siège (1) et le dispositif de détection de charge selon l'une quelconque des revendications 1 à 5, dans lequel :
les capteurs (21, 22, 23, 24) de charge sont agencés entre le siège (1) et un plancher intérieur de l'automobile.
